# EUROPÄISCHE PATENTSCHRIFT

(11) **EP 3 556 047 B1**
(45) Veröffentlichungstag und Bekanntmachung des Hinweises auf die Patenterteilung: **19.02.2025**
(21) Anmeldenummer: 17829669.5
(22) Anmeldetag: 28.12.2017
(51) Int. Cl.: H04L 9/00, H04L 9/08

(54) **PROGRAMMIERBARES HARDWARE-SICHERHEITSMODUL UND VERFAHREN AUF EINEM PROGRAMMIERBAREN HARDWARE-SICHERHEITSMODUL**
PROGRAMMABLE HARDWARE SECURITY MODULE AND METHOD ON A PROGRAMMABLE HARDWARE SECURITY MODULE
MODULE MATÉRIEL DE SÉCURITÉ PROGRAMMABLE ET PROCÉDÉ POUR UN MODULE MATÉRIEL DE SÉCURITÉ PROGRAMMABLE

(30) Priorität: 07.02.2017 DE 102017201891
(43) Veröffentlichungstag der Anmeldung: 23.10.2019
(73) Patentinhaber: Siemens Aktiengesellschaft, 80333 München (DE)
(72) Erfinder: ASCHAUER, Hans, 81829 München (DE); FALK, Rainer, 85586 Poing (DE); SCHNEIDER, Daniel, 80796 München (DE)
(74) Vertreter: Siemens Patent Attorneys
(86) Internationale Anmeldenummer: PCT/EP2017/084690
(87) Internationale Veröffentlichungsnummer: WO 2018/145805

(56) Entgegenhaltungen:
- US-A1- 2006 291 664
- US-A1- 2009 086 977
- US-A1- 2011 296 172

## Beschreibung

Die Erfindung betrifft ein programmierbares Hardware-Sicherheitsmodul sowie ein Verfahren zum Sichern eines privaten Schlüssels eines kryptographischen Schlüsselpaares und ein Verfahren zum gesicherten Bereitstellen eines privaten Schlüssels eines kryptographischen Schlüsselpaares auf einem programmierbaren Hardware Sicherheitsmodul.

Im Industrieautomatisierungsumfeld sind kryptographische Sicherheitsverfahren zu Zwecken der Absicherung von Daten oder der Authentisierung von Kommunikationspartnern nötig. Für kryptographische Sicherheitsmechanismen ist kryptographisches Schlüsselmaterial notwendig. Insbesondere werden kryptographische Schlüsselpaare aus privatem und öffentlichem Schlüssel eingesetzt. Die jeweiligen privaten Schlüssel sind dabei geheim zu halten, öffentliche Schlüssel oder zugeordnete Datenstrukturen wie digitale Zertifikate oder Security-Token werden den entsprechenden Komponenten zur Bearbeitung zur Verfügung gestellt. Zum Aufsetzen einer Schlüsselinfrastruktur, insbesondere zum Verteilen von kryptographischem Schlüsselmaterial, ist oftmals in kleinen Automatisierungsanlagen keine entsprechende Security-Infrastruktur verfügbar. Cloudbasierte Lösungen können oftmals wegen geltender Regularien betreffend geschlossene Netze oder wegen Anforderungen hinsichtlich einer lokalen Kontrollmöglichkeit nicht genutzt werden.

Es ist allgemein bekannt, zentrale Security-Infrastrukturen aufzubauen und zu betreiben, sog. PKI- oder Security-Rechenzentren. In der Praxis ist dies nicht in allen Anwendungsszenarien praktikabel.

US 2011296172 A1 offenbart eine Methode und ein System für eine Server-seitige Schlüsselgenerierung für Non-Token Klienten.

US 2006291664 A1 offenbart ein System und eine Methode für ein automatisches Management von kryptographischen Schlüssen aufweisend ein Schlüsselkontrollsystem, ein Schlüsselmanagementagentensystem und eine Schlüsselsystemanwendungsprogramm-Schnittstelle.

US 2009086977 A1 offenbart eine Methode aufweisende ein Erhalten, über ein Netzwerk, einer Anfrage zur Provision und Bereitstellung eines privaten Schlüssels, wobei der private Schlüssel zur Verwendung in einem Öffentlichen-und-privaten-Schlüsselsystem vorgesehen ist.

Vor diesem Hintergrund besteht die Aufgabe der vorliegenden Anmeldung darin, eine sichere und einfach realisierbare dezentrale Security-Infrastruktur bereitzustellen.

Diese Aufgabe wird durch die Gegenstände der unabhängigen Ansprüche gelöst. Vorteilhafte Ausgestaltungen sind in den abhängigen Ansprüchen angegeben.

Die Erfindung betrifft ein programmierbares Hardware-Sicherheitsmodul, aufweisend
- eine Applikationseinrichtung zum Erzeugen eines kryptographischen Schlüsselpaares,
- wobei das Schlüsselpaar einen privaten Schlüssel und einen öffentlichen Schlüssel aufweist,
- einen Speicherbereich mit einem Mastertransportschlüssel,
- ein Schlüsselableitungsmodul zum Ableiten eines schlüsselpaarspezifischen Transportschlüssels aus dem Master Transportschlüssel unter Verwendung eines schlüsselpaarspezifischen Ableitungsparameters,
   wobei der schlüsselpaarspezifische Ableitungsparameter für das Schlüsselpaar bzw. den privaten Schlüssel oder den öffentlichen Schlüssel des Schlüsselpaares kennzeichnend ist,
   wobei der schlüsselpaarspezifische Ableitungsparameter aus einer Zertifikatinformation des digitalen Zertifikates, insbesondere dem öffentlichen Schlüssel, einem Geräteidentifizierer, oder einem Hash-Wert des digitalen Zertifikates, gebildet wird,
   wobei der dem programmierbaren Hardware-Sicherheitsmodul oder dem korrespondierenden programmierbaren Hardware-Sicherheitsmodul zusammen mit einer Schlüsselanforderungs-nachricht übermittelt wirdund
   wobei der Schlüsselpaarspezifische Transportschlüssel zum Verschlüsseln des privaten Schlüssels des kryptographischen Schlüsselpaares verwendbar ist.

Unter einem programmierbaren Hardware-Sicherheitsmodul wird beispielsweise ein offenes Hardware-Sicherheitsmodul oder auch Hardware-Sicherheitsmodul oder Open Hardware Security Module verstanden, welches es erlaubt, bestehende kommerzielle Software oder Open Source Sicherheitssoftware auf einer geschützten Ausführungsumgebung auszuführen. Softwarepakete können dabei installiert werden und mit kleinem Aufwand ausgeführt werden. Ein programmierbares Hardware-Sicherheitsmodul ist zugleich geschützt, beispielsweise durch Hardware- oder Software-Sicherheitsmechanismen. Dabei kann die Ausführungsumgebung mit Software, Konfigurationsdaten oder Laufzeitdaten geschützt werden. Ein solches offenes Hardware-Sicherheitsmodul bietet die Möglichkeit, beispielsweise in einer Linux-Laufzeitumgebung security-kritische Daten und Programmcodes auszuführen. Mit weniger Aufwand lässt sich überdies eine lokale PKI, eine sog. Public-Key-Infrastructure, zum Erzeugen von Zertifikaten realisieren.

Auf dem Hardware-Sicherheitsmodul ist eine Applikationseinrichtung vorgesehen, mit der eine Applikation zum Erzeugen eines Schlüsselpaares verfügbar ist. Es handelt sich um ein kryptographisches Schlüsselpaar, wobei ein privater, geheimer Schlüssel und ein öffentlicher Schlüssel das Schlüsselpaar bilden. Überdies befindet sich auf dem Hardware-Sicherheitsmodul ein Speicherbereich mit einem Mastertransportschlüssel. Dieser Mastertransportschlüssel oder Master-Transport-Key ist zum Schutz des privaten Schlüssels vorgesehen.

Es ist auf dem Hardware-Sicherheitsmodul ein Schlüsselableitungsmodul vorgesehen zum Ableiten eines schlüsselpaarspezifischen Transportschlüssels unter Verwendung eines schlüsselpaarspezifischen Ableitungsparameters. Der schlüsselpaarspezifische Transportschlüssel ist nun zum Verschlüsseln des privaten Schlüssels verwendbar. Es wird je Schlüsselpaar ein spezifischer Ableitungsparameter verwendet, sodass der schlüsselpaarspezifische Transportschlüssel idealerweise nur einmalig je Schlüsselpaar erzeugt wird. Mit anderen Worten unterscheiden sich alle schlüsselpaarspezifischen Transportschlüssel für verschiedene Schlüsselpaare untereinander. Der schlüsselpaarspezifische Ableitungsparameter ist somit Kennzeichen für das Schlüsselpaar bzw. den privaten Schlüssel oder den öffentlichen Schlüssel des Schlüsselpaares. Der schlüsselpaarspezifische Ableitungsparameter wird dem programmierbaren Hardware-Sicherheitsmodul beispielsweise über eine Schnittstelle bereitgestellt oder ist in einem Speicherbereich hinterlegt.

Es kann auf vorteilhafte Weise eine einfache dezentrale PKI gebaut werden, um Geräteschlüssel für ein Zielgerät und insbesondere Gerätezertifikate zu erzeugen. Das beschriebene programmierbare Hardware-Sicherheitsmodul kann sicherstellen, dass ein Transportschlüssel zum Schutz des erzeugten privaten Schlüssels schlüsselpaarspezifisch ausgebildet ist. Beispielsweise kann auf einem solchen Modul unter Verwendung von Skripten und Open Source Software wie beispielsweise Open SSL das Erzeugen von Schlüsselpaaren, d.h. privaten Schlüsseln und dazugehörigen Zertifikaten, einfach realisiert werden und zugleich durch die Sicherung mit dem schlüsselpaarspezifischen Transportschlüssel die Sicherheit eines auf diese Weise erzeugten privaten Schlüssels sichergestellt werden.

Gemäß einer Ausgestaltung weist das programmierbare Hardware-Sicherheitsmodul ferner eine Ausgabeeinheit auf zum Ausgeben des privaten Schlüssels als verschlüsselte Datei. Beispielsweise handelt es sich um eine sog. PEM-Datei mit dem Dateiformat privacy enhanced mail certificate. Das Ausgeben erfolgt insbesondere an die Geräte, auf welchen der private Schlüssel des erzeugten kryptographischen Schlüsselpaares hinterlegt werden soll. Es kann auch ein anderes Dateiformat statt einer PEM-Datei, z.B. eine PKCS#12-Datei, verwendet werden.

Gemäß einer Ausgestaltung weist das programmierbare Hardware-Sicherheitsmodul ferner eine Einrichtung zum Erzeugen eines digitalen Zertifikates umfassend des öffentlichen Schlüssels des kryptographischen Schlüsselpaares auf. Auf vorteilhafte Weise wird das digitale Zertifikat direkt bei Erzeugung des kryptographischen Schlüsselpaares, insbesondere als weiterer Schritt, mit erzeugt. Das digitale Zertifikat wird vorzugsweise ausgegeben, beispielsweise an ein Zielgerät, zur Zuordnung des im digitalen Zertifikat enthaltenen öffentlichen Schlüssels zum programmierbaren Hardware-Sicherheitsmodul. Insbesondere weist das digitale Zertifikat Identifizierungsdaten des programmierbaren Hardware-Sicherheitsmoduls auf.

Die Erfindung betrifft ferner ein korrespondierendes programmierbares Hardware-Sicherheitsmodul, aufweisend
- eine Empfangseinrichtung zum Empfangen eines privaten Schlüssels eines kryptographischen Schlüsselpaares als verschlüsselte Datei sowie eines digitalen Zertifikates umfassend einen öffentlichen Schlüssel des kryptographischen Schlüsselpaares,
- einen Speicherbereich mit einem Mastertransportschlüssel,
- ein Schlüsselableitungsmodul zum Ableiten eines schlüsselpaarspezifischen Transportschlüssels aus dem Master Transportschlüssel unter Verwendung eines schlüsselpaarspezifischen Ableitungsparameters,
   wobei der schlüsselpaarspezifische Ableitungsparameter für das Schlüsselpaar bzw. den privaten Schlüssel oder den öffentlichen Schlüssel des Schlüsselpaares kennzeichnend ist,
   wobei der schlüsselpaarspezifische Ableitungsparameter aus einer Zertifikatinformation des digitalen Zertifikates, insbesondere dem öffentlichen Schlüssel, einem Geräteidentifizierer, oder einem Hash-Wert des digitalen Zertifikates, gebildet wird,
   wobei der dem programmierbaren Hardware-Sicherheitsmodul oder dem korrespondierenden programmierbaren Hardware-Sicherheitsmodul zusammen mit einer Schlüsselanforderungs-nachricht übermittelt wirdund
   wobei der schlüsselpaarspezifische Transportschlüssel zum Entschlüsseln der verschlüsselten Datei verwendbar ist.

Auf vorteilhafte Weise werden die beiden Module, in der vorliegenden Anmeldung zur Unterscheidung als programmierbares Hardware-Sicherheitsmodul und korrespondierendes programmierbares Hardware-Sicherheitsmodul bezeichnet, in einer Realisierungsvariante gemeinsam eingesetzt. Das korrespondierende programmierbare Hardware-Sicherheitsmodul ist dabei zielgeräteseitig oder feldgeräteseitig im Einsatz und kommuniziert insbesondere mit dem Zielgerät. Beiden Sicherheitsmodulen ist das erfindungsgemäße Schlüsselableitungsmodul gemeinsam, lediglich im Einsatz des generierten schlüsselpaarspezifischen Transportschlüssels unterscheiden sich die beiden Module: Das programmierbare Hardware-Sicherheitsmodul erzeugt den zu schützenden privaten Schlüssel des kryptographischen Schlüsselpaares und kann auf vorteilhafte Weise dazu verwendet werden, eine mit dem schlüsselpaarspezifischen Transportschlüssel verschlüsselte Schlüsseldatei zu erzeugen. Auf der anderen Seite verwendet das korrespondierende programmierbare Hardware-Sicherheitsmodul den ebenfalls generierten schlüsselpaarspezifischen Transportschlüssel beispielsweise zum Entschlüsseln der erhaltenen Schlüsseldatei und letztlich zum Bereitstellen an ein Zielgerät oder Feldgerät, welches mit dem Schlüsselpaar ausgerüstet werden soll.

Gemäß den Richtlinien für die Prüfung F IV 3.2 können für mehrere Gegenstände, die sich gegenseitig ergänzen oder zusammenwirken, jeweilige unabhängige Ansprüche formuliert werden. Um solche zusammenwirkenden korrespondierenden Komponenten handelt es sich vorliegend.

Beispielsweise wird die verschlüsselte Schlüsseldatei auf dem korrespondierenden programmierbaren Hardware-Sicherheitsmodul neu verschlüsselt und dem Zielgerät verschlüsselt bereitgestellt. Insbesondere wird dafür ein ausgehandelter Schlüssel zwischen Zielgerät und korrespondierendem und programmierbaren Hardware-Sicherheitsmodul verwendet.

Gemäß einer Ausgestaltung weist das korrespondierende programmierbare Hardware-Sicherheitsmodul ferner eine Schnittstelle zum Übertragen des schlüsselpaarspezifischen Transportschüssels an ein Zielgerät auf. Das beschriebene Zielgerät erhält somit den schlüsselpaarspezifischen Transportschlüssel zum Entschlüsseln der Schlüsseldatei. Nach der Entschlüsselung der Schlüsseldatei liegen auf dem Feldgerät dann der private Schlüssel bei Bedarf vor, sowie das digitale Zertifikat, sofern es dem Zielgerät übermittelt wird.

Gemäß einer alternativen Ausgestaltung weist das korrespondierende programmierbare Hardware-Sicherheitsmodul ferner eine Schnittstelle zum Übertragen des privaten Schlüssels an ein Zielgerät auf. Beispielsweise wird dieser private Schlüssel mit einem speziell zwischen Feldgerät und korrespondierendem programmierbaren Hardware-Sicherheitsmodul ausgehandeltem symmetrischen Schlüssel gesichert.

Die Erfindung betrifft ferner ein Verfahren zum Sichern eines privaten Schlüssels eines kryptographischen Schlüsselpaares, mit folgenden Schritten:
- Erzeugen des kryptographischen Schlüsselpaares auf einem programmierbaren Hardware-Sicherheitsmodul,
- Ableiten eines schlüsselpaarspezifischen Transportschlüssels aus einem Master Transportschlüssel unter Verwendung eines schlüsselpaarspezifischen Ableitungsparameters,
   wobei der schlüsselpaarspezifische Ableitungsparameter aus einer Zertifikatinformation des digitalen Zertifikates, insbesondere dem öffentlichen Schlüssel, einem Geräteidentifizierer, oder einem Hash-Wert des digitalen Zertifikates, gebildet wird,
   wobei der dem programmierbaren Hardware-Sicherheitsmodul oder dem korrespondierenden programmierbaren Hardware-Sicherheitsmodul zusammen mit einer Schlüsselanforderungs-nachricht übermittelt wird
- Verschlüsseln des privaten Schlüssels mit dem schlüsselpaarspezifischen Transportschlüssel.

Gemäß einer Ausgestaltung umfasst das Verfahren ferner das Erzeugen eines digitalen Zertifikates umfassend einen öffentlichen Schlüssel des kryptographischen Schlüsselpaares.

Die Erfindung betrifft ferner ein Verfahren zum gesicherten Bereitstellen eines privaten Schlüssels eines kryptographischen Schlüsselpaares auf einem korrespondierenden programmierbaren Hardware-Sicherheitsmodul, mit folgenden Schritten:
- Empfangen des privaten Schlüssels als verschlüsselte Datei sowie eines digitalen Zertifikates umfassend einen öffentlichen Schlüssel des kryptographischen Schlüsselpaares,
- Ableiten eines schlüsselpaarspezifischen Transportschlüssels aus einem Master Transportschlüssel unter Verwendung eines schlüsselpaarspezifischen Ableitungsparameters,
   wobei der schlüsselpaarspezifische Ableitungsparameter aus einer Zertifikatinformation des digitalen Zertifikates, insbesondere dem öffentlichen Schlüssel, einem Geräteidentifizierer, oder einem Hash-Wert des digitalen Zertifikates, gebildet wird,
   wobei der dem programmierbaren Hardware-Sicherheitsmodul oder dem korrespondierenden programmierbaren Hardware-Sicherheitsmodul zusammen mit einer Schlüsselanforderungs-nachricht übermittelt wird
   wobei der schlüsselpaarspezifische Transportschlüssel zum Entschlüsseln der verschlüsselten Datei verwendbar ist.

Wiederum wirken die Verfahren zum Sichern eines privaten Schlüssels und zum gesicherten Bereitstellen eines privaten Schlüssels auf einem korrespondierenden programmierbaren Hardware-Sicherheitsmodul zusammen, sodass beide Verfahren, die auf miteinander korrespondierenden Vorrichtungen ausführbar sind, als unabhängige Ansprüche konform mit den Bestimmungen in den Richtlinien wie oben ausgeführt beansprucht werden.

Gemäß einer Ausgestaltung umfasst das Verfahren ferner:
- Bereitstellen des digitalen Zertifikates an ein Zielgerät,
- Entschlüsseln der verschlüsselten Datei mittels des schlüsselpaarspezifischen Transportschlüssels,
- Bereitstellen des entschlüsselten privaten Schlüssels an das Zielgerät.

In dieser Variante entschlüsselt das korrespondierende programmierbare Hardware-Sicherheitsmodul zunächst den privaten Schlüssel, in dem es den schlüsselpaarspezifischen Transportschlüssel selbst verfügbar hat und auf die Schlüsseldatei anwendet, und überträgt sodann den privaten Schlüssel des Schlüsselpaares. Dieses Übertragen erfolgt vorzugsweise wiederum nicht in Klartext, sondern unter Zuhilfenahme eines mit dem Zielgerät vereinbarten Schlüssels, insbesondere eines symmetrischen Schlüssels, welcher über ein Diffie-Hellman-Schlüsselaustauschverfahren ausgehandelt wurde.

Gemäß einer Ausgestaltung umfasst das Verfahren ferner:
- Bereitstellen des digitalen Zertifikates an ein Zielgerät,
- Bereitstellen der verschlüsselten Datei an das Zielgerät,
- Bereitstellen des schlüsselpaarspezifischen Transportschlüssels an das Zielgerät.

In dieser Variante überträgt das korrespondierende programmierbare Hardware-Sicherheitsmodul den schlüsselspezifischen Transportschlüssel an das Zielgerät, welche dann selbstständig zur Entschlüsselung der Schlüsseldatei fähig ist.

Gemäß einer Ausgestaltung authentisiert das korrespondierende programmierbare Hardware-Sicherheitsmodul das Zielgerät. Beispielsweise findet dazu eine Kommunikation zwischen dem korrespondierenden programmierbaren Hardware-Sicherheitsmodul und dem Zielgerät statt zum Austausch von Identifizierungsinformationen oder Credentials des Zielgeräts. Somit ist das Übertragen des entschlüsselten privaten Schlüssels oder des schlüsselpaarspezifischen Transportschlüssels an das Zielgerät auf vorteilhafte Weise daran geknüpft, dass das Zielgerät zuvor authentifiziert wurde.

Gemäß einer Ausgestaltung erzeugt das korrespondierende programmierbare Hardware-Sicherheitsmodul einen zielgerätespezifischen Schlüssel und stellt dem Zielgerät den privaten Schlüssel oder den schlüsselpaarspezifischen Transportschlüssel mit dem zielgerätespezifischen Schlüssel geschützt bereit.

Gemäß einer Ausgestaltung wird zum Ableiten des schlüsselpaarspezifischen Transportschlüssels eine Schlüsselableitungsfunktion verwendet, welcher als Eingabe zumindest der schlüsselpaarspezifische Ableitungsparameter und der Master Transportschlüssel vorgegeben werden. Beispielsweise wird als Schlüsselableitungsfunktion eine sog. Key Derivation Function verwendet, beispielsweise eine sog. HKDF oder HMAC Based Key Derivation Function, wobei eine sog. HMAC Hash-Funktion zum Einsatz kommt oder eine sog. PBKDF2 oder Password Based Key Derivation Function 2, eine genormte Funktion zur Ableitung eines Schlüssels aus einem Passwort. Diesen beispielshalber genannten Funktionen wird einerseits der Mastertransportschlüssel oder Master Transport Key vorgegeben, welcher die Basis der Schlüsselableitung bildet. Andererseits wird zusätzlich der schlüsselpaarspezifische Ableitungsparameter als Eingabeparameter oder Derivation Parameter vorgegeben.

Gemäß einer Ausgestaltung wird der schlüsselpaarspezifische Ableitungsparameter aus einer Zertifikatinformation des digitalen Zertifikates, insbesondere dem öffentlichen Schlüssel, einem Geräteidentifizierer, oder einem Hash-Wert des digitalen Zertifikates, gebildet.

Beispielsweise wird der Schlüsselableitungsparameter aus einer Information des den privaten Schlüssel zugeordneten digitalen Zertifikates gebildet. Das einem privaten Schlüssel zugeordnete digitale Zertifikat ist beispielsweise ein X.509-Zertifikat oder ein JSON-Token. Der Ableitungsparameter kann beispielsweise konkret gebildet werden unter Verwendung des öffentlichen Schlüssels des erzeugten Schlüsselpaares oder einem Geräteidentifizierer, oder einem Hash-Wert des digitalen Zertifikates, gebildet.

Beispielsweise wird der Schlüsselableitungsparameter aus einer Information des den privaten Schlüssel zugeordneten digitalen Zertifikates gebildet. Das einem privaten Schlüssel zugeordnete digitale Zertifikat ist beispielsweise ein X.509-Zertifikat oder ein JSON-Token. Der Ableitungsparameter kann beispielsweise konkret gebildet werden unter Verwendung des öffentlichen Schlüssels des erzeugten Schlüsselpaares oder unter Verwendung eines Geräteidentifizierers, der dem programmierbaren Hardware-Sicherheitsmodul oder dem korrespondierenden programmierbaren Hardware-Sicherheitsmodul zusammen mit einer Schlüsselanforderungsnachricht übermittelt wird, beispielsweise unter Verwendung einer Seriennummer. Ferner kann ein weiteres Attribut des erzeugten Zertifikates, beispielsweise die Signatur des Zertifikates, die Seriennummer des Zertifikates oder ein zusätzliches Attribut aus einer Zertifikatserweiterung verwendet werden. Es kann ferner das gesamte Zertifikat verwendet werden oder ein Hash-Wert des gesamten Zertifikates, beispielsweise ein mittels der Funktion SHA256 erzeugter Hash-Wert.

Die genannten Parameter, welche in die Bildung des Ableitungsparameters eingehen, können jeweils direkt verwendet werden oder es kann jeweils mittels einer Hash-Funktion ein Hash-Wert abhängig von diesen Daten gebildet werden, der dann als Ableitungsparameter in die Schlüsselableitungsfunktion eingeht. Für alle genannten Beispiele kann zusätzlich ein von dem programmierbaren Sicherheitsmodul oder dem korrespondierenden programmierbaren Hardware-Sicherheitsmodul selbst gewählter Ableitungsparameter optional eingehen. Dies kann eine zusätzliche Sicherheit bei der Erzeugung des schlüsselpaarspezifischen Transportschlüssels darstellen. Der Ableitungsparameter wird durch eine Ableitungsparameterbildungsfunktion oder Derivation Parameter Construction Function DPCF gebildet.

Auf vorteilhafte Weise kann ein weiterer Knoten, welcher den Master Transport Key kennt, allein auf Basis des Zertifikates oder einer Teilinformation des Zertifikates den schlüsselpaarspezifischen Transportschlüssel bestimmen.

Durch das Zusammenwirken der beschriebenen unter Schutz gestellten Vorrichtungen und Verfahren wird es ermöglicht, ein Erzeugen und Einspielen von Geräteschlüsseln mit wenig Aufwand auf sichere Weise zu realisieren.

Die Module und Einrichtungen können hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Prozessor oder als Mikroprozessor ausgebildet sein. Bei einer softwaretechnischen Implementierung kann die jeweilige Einrichtung oder das jeweilige Modul als Computerprogrammprodukt, als eine Funktion, als eine Routine, als Teil eines Programmcodes oder als ausführbares Objekt ausgebildet sein. Unter einem Prozessor ist eine elektronische Schaltung zur computerbasierten Datenverarbeitung zu verstehen, beispielsweise eine CPU. Es kann sich um die CPU eines Computers handeln oder um einen Mikroprozessor eines Mikrochips.

Die Erfindung wird nachfolgend anhand von Ausführungsbeispielen mit Hilfe der Figuren näher erläutert. Es zeigen:
Figur 1: Eine schematische Darstellung eines programmierbaren Hardware-Sicherheitsmoduls gemäß einem ersten Ausführungsbeispiel der Erfindung;
Figur 2: Eine schematische Darstellung eines korrespondierenden programmierbaren Hardware-Sicherheitsmoduls gemäß einem zweiten Ausführungsbeispiel der Erfindung;
Figur 3: Ein Blockdiagramm zur schematischen Darstellung eines Verfahrens zum Sichern eines privaten Schlüssels gemäß dem ersten Ausführungsbeispiel der Erfindung;
Figur 4: Ein Blockdiagramm zur schematischen Darstellung eines Verfahrens zum gesicherten Bereitstellen eines privaten Schlüssels gemäß dem zweiten Ausführungsbeispiel der Erfindung.

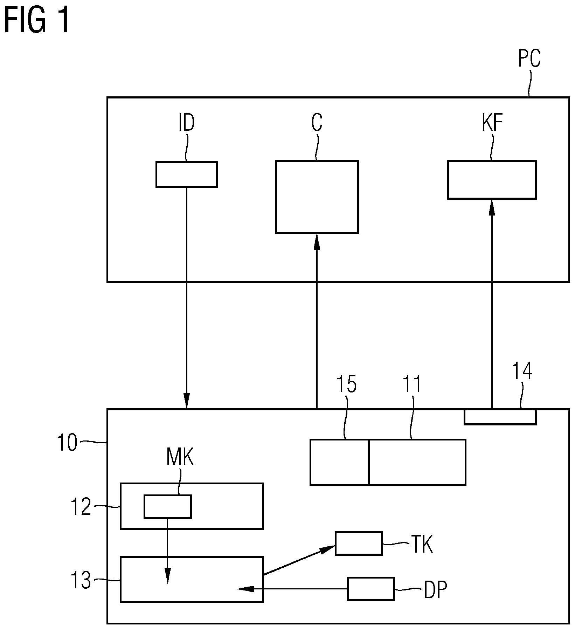

Figur 1 zeigt ein programmierbares Hardware-Sicherheitsmodul 10, welches mit einem Industrierechner PC Daten austauschen kann. Das programmierbare Hardware-Sicherheitsmodul 10 ist beispielsweise ein sog. offenes Hardware-Sicherheitsmodul oder Open Hardware Security Module oder Industrial Security Module. Auf dem programmierbaren Hardware-Sicherheitsmodul ist beispielsweise eine Applikationseinrichtung 11 vorgesehen, auf welcher beispielsweise eine Applikation installiert ist, welche ein asymmetrisches Schlüsselpaar erzeugt. Bei dem kryptographischen Schlüsselpaar handelt es sich somit um ein Paar aus öffentlichem und privatem Schlüssel. Beispielsweise stellt die Applikation mittels einer Einrichtung zum Erzeugen eines digitalen Zertifikates C dieses Zertifikat C aus.

Der Rechner PC, welcher in einem Szenario genutzt werden soll zum Ausrüsten eines Zielgerätes, beispielsweise eines Feldgerätes, mit kryptographischem Schlüsselmaterial, überträgt einen Identifizierer oder einen Identifier ID des Zielgerätes an das programmierbare Hardware-Sicherheitsmodul 10. Dieses nutzt die Information um ein Schlüsselpaar für das Zielgerät zu erzeugen. Das digitale Zertifikat C wird beispielsweise auf dem Rechner PC hinterlegt, um es später dem Feldgerät übermitteln zu können. Auf dem programmierbaren Hardware-Sicherheitsmodul 10 ist ferner ein Speicherbereich 12 vorgesehen, der einen Mastertransportschlüssel MK oder Master Transport Key aufweist. Dieser Master Key MK ist vorzugsweise geschützt zu hinterlegen. Beispielsweise sind Tamper-Schutzmaßnahmen vorgesehen, um den geheim zu haltenden Masterschlüssel MK vor unerlaubtem Auslesen oder Manipulation zu schützen. Auf dem programmierbaren Hardware-Sicherheitsmodul 10 ist ferner ein Schlüsselableitungsmodul 13 vorgesehen, welches einen schlüsselpaarspezifischen Transportschlüssel TK aus dem Mastertransportschlüssel MK unter Verwendung eines schlüsselpaarspezifischen Ableitungsparameters DP ableitet. Der Mastertransportschlüssel MK wird dem Schlüsselableitungsmodul 13 intern aus dem Speicherbereich zur Verfügung gestellt. Der schlüsselpaarspezifische Ableitungsparameter DP kann in einer Ausführungsform auf dem programmierbaren Hardware-Sicherheitsmodul 10 vorgesehen sein oder alternativ dem Schlüsselableitungsmodul 13 von extern zur Verfügung gestellt werden. Der abgeleitete schlüsselpaarspezifische Transportschlüssel TK ist auf dem programmierbaren Hardware-Sicherheitsmodul 10 verfügbar und verwendbar insbesondere auf vorteilhafte Weise zur Verschlüsselung des erzeugten privaten Schlüssels des kryptographischen Schlüsselpaares. Es wird beispielsweise eine verschlüsselte Datei KF erzeugt und diese an einer Ausgabeeinheit 14 des programmierbaren Hardware-Sicherheitsmoduls 10 dem Rechner PC zur Verfügung gestellt.

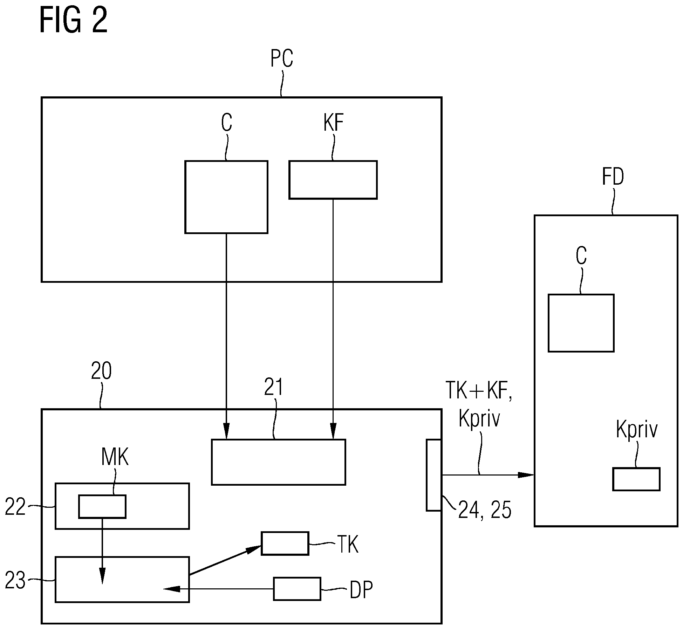

Figur 2 zeigt ein korrespondierendes programmierbares Hardware-Sicherheitsmodul 20, welches vorteilhaft im Zusammenspiel mit dem im Zusammenhang mit Figur 1 beschriebenen Rechner PC verwendet werden kann. Außerdem steht das korrespondierende programmierbare Hardware-Sicherheitsmodul 20 mit einem Feldgerät FD oder Zielgerät in Kontakt. Insbesondere kann das korrespondierende programmierbare Hardware-Sicherheitsmodul 20 Daten an das Feldgerät FD übermitteln. Dies geschieht über eine Schnittstelle 24, 25. Das korrespondierende programmierbare Hardware-Sicherheitsmodul 20 weist eine Empfangseinrichtung 21 zum Empfangen eines privaten Schlüssels auf, welcher vom Rechner PC in verschlüsselter oder unverschlüsselter Form empfangen wird. Insbesondere übermittelt der im Zusammenhang mit Figur 1 beschriebene Rechner PC eine verschlüsselte Schlüsseldatei KF an das korrespondierende programmierbare Hardware-Sicherheitsmodul 20. Ebenso wird auf vorteilhafte Weise ein Zertifikat C, welches gemäß der Beschreibung des ersten Ausführungsbeispiels auf dem Rechner PC hinterlegt wurde, nun vom Rechner PC an die Empfangseinrichtung 21 übermittelt. Auf dem korrespondierenden programmierbaren Hardware-Sicherheitsmodul 20 ist ferner ein Speicherbereich 22 vorgesehen mit einem Mastertransportschlüssel MK.

Für das beschriebene Szenario, in welchem das anhand von Figur 1 erläuterte programmierbare Hardware-Sicherheitsmodul 10 mit dem anhand von Figur 2 beschriebenen korrespondierenden programmierbaren Hardware-Sicherheitsmodul 20 zusammenwirken soll, ist auf den beiden Modulen der identische Mastertransportschlüssel MK zu hinterlegen. Dann lässt sich auf vorteilhafte Weise mit Hilfe eines auf dem korrespondierenden programmierbaren Hardware-Sicherheitsmoduls 20 vorgesehenen Schlüsselableitungsmodul 23 der identische schlüsselpaarspezifische Transportschlüssel ableiten aus dem Mastertransportschlüssel MK unter Verwendung eines schlüsselpaarspezifischen Ableitungsparameters DP. Dafür muss auch eine vorgesehene Schlüsselableitungsfunktion mit derjenigen auf dem programmierbaren Hardware-Sicherheitsmodul 10 übereinstimmen sowie der verwendete schlüsselpaarspezifische Ableitungsparameter DP. Wird der schlüsselpaarspezifische Ableitungsparameter DP direkt auf dem jeweiligen Modul aus dem öffentlichen Schlüssel oder einem digitalen Zertifikat des öffentlichen Schlüssels generiert, so ist auf beiden Modulen jeweils der identische schlüsselpaarspezifische Ableitungsparameter DP generierbar. Weitere eingehende Parameter sowie die Funktion zum Generieren des Ableitungsparameters sind zu diesem Zweck identisch. Beispielsweise wird auf beiden Modulen der schlüsselpaarspezifische Ableitungsparameter DP erzeugt, indem ein Hash-Wert des gesamten digitalen Zertifikates C erzeugt wird. Dies ist vorteilhafterweise möglich, wenn auf beiden Modulen die Informationen des digitalen Zertifikates C verfügbar sind, sei es durch eigenes Generieren oder durch Empfangen vom Rechner PC, und eine identische Hashfunktion angewendet wird.

Mit Hilfe des auf dem korrespondierenden programmierbaren Hardware-Sicherheitsmodul 20 generierten schlüsselpaarspezifischen Transportschlüssels TK kann die empfangene verschlüsselte Datei KF beispielsweise entschlüsselt werden. Der private Schlüssel des für das Zielgerät FD vorgesehenen Schlüsselpaares ist dann auf dem korrespondierenden programmierbaren Hardware-Sicherheitsmodul 20 verfügbar und kann beispielsweise über die Schnittstelle 25 an das Feldgerät FD übertragen werden. Auf diesem ist dann der private Schlüssel Kpriv verfügbar. Auch das Zertifikat C wird auf vorteilhafte Weise an das Zielgerät übermittelt, so dass das Schlüsselmaterial somit auf gesichertem Wege auf dem Feldgerät FD hinterlegt wurde. Ebenso ist es vorteilhafterweise möglich, über eine Schnittstelle 24 die verschlüsselte Datei KF und den generierten schlüsselpaarspezifischen Transportschlüssel TK an das Feldgerät FD zu übermitteln. Auf dem Feldgerät FD kann dann eine Entschlüsselung der Schlüsseldatei KF erfolgen, so dass final auch bei dieser Variante der private Schlüssel Kpriv auf dem Feldgerät FD vorhanden ist.

Die beiden Module kommen auf vorteilhafte Weise in der Fertigung oder bei Inbetriebnahme eines Feldgerätes zum Einsatz, wenn es darum geht, auf dem Feldgerät FD das Schlüsselmaterial, d.h. ein Zertifikat und den dazugehörigen privaten Schlüssel, zu hinterlegen. Auf vorteilhafte Weise sind unterschiedliche Schnittstellen vorgesehen zur Ausgabe des schlüsselpaarspezifischen Transportschlüssels TK und der verschlüsselten Datei mit dem privaten Schlüssel KF, so dass die beiden Informationen auf unterschiedlichen Wegen ausgegeben werden. Beispielsweise ist ein Display sowie eine weitere Ausgabeeinheit, beispielsweise drahtgebunden, vorgesehen.

In einer Variante sind sämtliche Schlüssel der Applikation, wie beispielsweise der Mastertransportschlüssel MK und eine Signatur der Zertifizierungsinstanz zum Signieren des Zertifikates, in der Applikation fest eincodiert. Ferner können zusätzlich in der Applikation Felder des auszustellenden Zertifikates C fest vorgegeben sein, so dass bei der Nutzung der Applikation lediglich die Geräte-ID des Zielgerätes FD übertragen werden muss, um das digitale Zertifikat C für das so identifizierte Feldgerät FD zu erstellen. Alternativ können die Parameter in der Applikation durch Konfigurationsnachrichten gesetzt werden. Nach einer Aktivierung der Applikation durch ein Aktivierungskommando sind sie dann nicht mehr änderbar.

Besonders vorteilhafterweise wird auf dem korrespondierbaren programmierbaren Hardware-Sicherheitsmodul die verschlüsselte Schlüsseldatei KF, welche den privaten Schlüssel verschlüsselt enthält, entschlüsselt und mit einem für das Zielgerät DF spezifischen Schlüssel neu verschlüsselt. Beispielsweise wird dieser Schlüssel mittels eines Diffie-Hellmann-Schlüsselaustausches zwischen dem korrespondierendem Hardware-Sicherheitsmodul 20 und dem Zielgerät DF dynamisch ausgehandelt. Das so umgeschlüsselte Schlüsselfile KF wird an das Zielgerät DF übertragen und durch das Zielgerät DF entschlüsselt. Insbesondere wird für diese Übertragung eine separate Kommunikationsschnittstelle wie beispielsweise JTAG oder SPI verwendet.

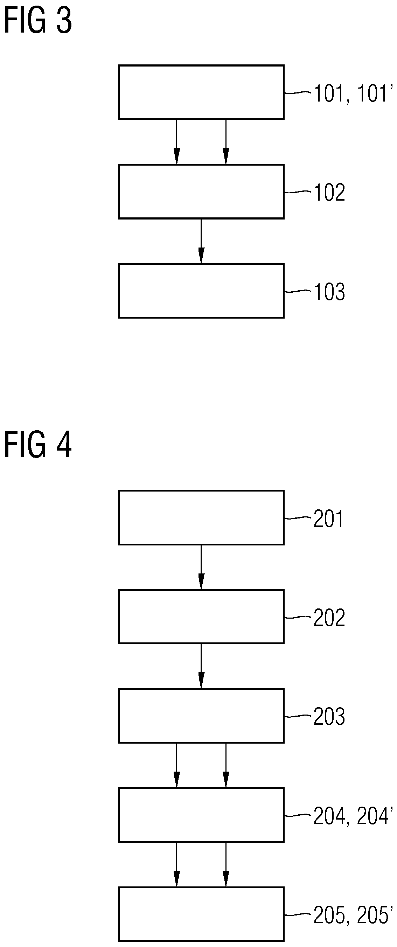

Figur 3 zeigt schematisch die Verfahrensschritte bei einem Verfahren zum Sichern eines privaten Schlüssels eines kryptographischen Schlüsselpaares gemäß dem ersten Ausführungsbeispiel. Es erfolgt ein Erzeugen 101 des kryptographischen Schlüsselpaares auf einem programmierbaren Hardware-Sicherheitsmodul, beispielsweise dem anhand von Figur 1 im ersten Ausführungsbeispiel erläuterten programmierbaren Hardware-Sicherheitsmodul. Es erfolgt ferner ein Ableiten 102 eines schlüsselpaarspezifischen Transportschlüssels aus einem Mastertransportschlüssel unter Verwendung eines schlüsselpaarspezifischen Ableitungsparameters. Ferner erfolgt ein Verschlüsseln 103 einer Datei aufweisend den privaten Schlüssel mit dem schlüsselpaarspezifischen Transportschlüssel. Die Schritte 101 und 102 können dabei separat voneinander und insbesondere in variabler Reihenfolge ausgeführt werden.

Zusätzlich und entweder zeitgleich oder zeitlich nachfolgend zu dem Schritt 101 erfolgt ein Erzeugen 101' eines digitalen Zertifikates umfassend einen öffentlichen Schlüssel des kryptographischen Schlüsselpaares.

Figur 4 beschreibt ein Verfahren zum gesicherten Bereitstellen eines privaten Schlüssels eines kryptographischen Schlüsselpaares auf einem korrespondierenden programmierbaren Hardware-Sicherheitsmodul, insbesondere auf dem anhand von Figur 2 im zweiten Ausführungsbeispiel erläuterten korrespondierenden programmierbaren Hardware-Sicherheitsmodul. Es erfolgt ein Empfangen 201 des privaten Schlüssels als verschlüsselte Datei sowie eines digitalen Zertifikates umfassend einen öffentlichen Schlüssel des kryptographischen Schlüsselpaares. Es erfolgt ferner ein Ableiten 202 eines schlüsselpaarspezifischen Transportschlüssels aus einem Mastertransportschlüssel unter Verwendung eines schlüsselpaarspezifischen Ableitungsparameters. Die Schritte 201 und 202 können dabei separat voneinander und insbesondere zeitlich variabel entweder zeitlich parallel oder zeitlich versetzt durchgeführt werden.

Es erfolgt ferner ein Bereitstellen 203 des digitalen Zertifikates an ein Zielgerät. In einer Variante erfolgt ein Entschlüsseln 204 der verschlüsselten Datei mittels des schlüsselpaarspezifischen Transportschlüssels sowie ein Bereitstellen 205 des entschlüsselten privaten Schlüssels an das Zielgerät. Dabei können die beiden Schritte 204 und 205 relativ zum Schritt 203 entweder zeitlich versetzt oder zeitgleich durchgeführt werden. Alternativ zum Schritt 204 kann auch ein Bereitstellen 204' der verschlüsselten Datei an das Zielgerät und ein Bereitstellen 205' des schlüsselpaarspezifischen Transportschlüssels an das Zielgerät erfolgen. Dabei können die beiden Schritte 204'und 205' relativ zum Schritt 203 entweder zeitlich versetzt oder zeitgleich durchgeführt werden. Die Schritte 204' und 205' sind wiederum in beliebiger Reihenfolge durchführbar.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Mit den beschriebenen Vorrichtungen und Verfahren wird eine dezentrale PKI aufgebaut, mittels derer Geräteschlüssel und Gerätezertifikate erzeugt werden können und geschützt Zielgeräten bereitgestellt werden können. Eine zentrale Rolle spielt dabei der schlüsselpaarspezifische Transportschlüssel zum Schutz des erzeugten und zu übertragenden privaten Schlüssels. Dieser ist durch eine Schlüsselableitung aus einem Masterschlüssel unter Verwendung eines schlüsselpaarspezifischen Ableitungsparameters an das jeweils für ein Zielgerät vorgesehene Schlüsselpaar gebunden. Dadurch wird das Erzeugen und Einspielen von Geräteschlüsseln mit wenig Aufwand und auf sichere Weise realisiert.

## Patentansprüche

1. Programmierbares Hardware Sicherheitsmodul (10), aufweisend:
- eine Applikationseinrichtung (11) zum Erzeugen eines kryptographischen Schlüsselpaares,
wobei das kryptographische Schlüsselpaar einen privaten Schlüssel und einen öffentlichen Schlüssel aufweist,
- einen Speicherbereich (12) mit einem Master Transportschlüssel (MK),
- eine Einrichtung (15) zum Erzeugen eines digitalen Zertifikates umfassend den öffentlichen Schlüssel des kryptographischen Schlüsselpaares,
wobei das kryptographische Schlüsselpaar für ein korrespondierendes programmierbares Hardware-Sicherheitsmodul erzeugt wird,
- ein Schlüsselableitungsmodul (13) zum Ableiten eines schlüsselpaarspezifischen Transportschlüssels (TK) aus dem Master Transportschlüssel (MK) unter Verwendung eines schlüsselpaarspezifischen Ableitungsparameters (DP),
wobei der schlüsselpaarspezifische Ableitungsparameter für das Schlüsselpaar bzw. den privaten Schlüssel oder den öffentlichen Schlüssel des Schlüsselpaares kennzeichnend ist, wobei der schlüsselpaarspezifische Ableitungsparameter aus einer Zertifikatinformation des digitalen Zertifikates, insbesondere dem öffentlichen Schlüssel des digitalen Zertifikates oder einem Hash-Wert des digitalen Zertifikates oder einem Geräteidentifizierer, gebildet wird,
wobei der Geräteidentifizierer dem programmierbaren Hardware-Sicherheitsmodul oder dem korrespondierenden programmierbaren Hardware-Sicherheitsmodul zusammen mit einer Schlüsselanforderungsnachricht übermittelt wird, und
wobei der schlüsselpaarspezifische Transportschlüssel (TK) zum Verschlüsseln des privaten Schlüssels des kryptographischen Schlüsselpaares verwendbar ist.

2. Programmierbares Hardware Sicherheitsmodul (10) nach Anspruch 1, ferner aufweisend eine Ausgabeeinheit (14) zum Ausgeben des privaten Schlüssels als verschlüsselte Datei (KF).

3. Korrespondierendes programmierbares Hardware Sicherheitsmodul 20, aufweisend
- eine Empfangseinrichtung (21) zum Empfangen eines privaten Schlüssels eines kryptographischen Schlüsselpaares als verschlüsselte Datei sowie eines digitalen Zertifikates umfassend einen öffentlichen Schlüssel des kryptographischen Schlüsselpaares von einem programmierbaren Hardware Sicherheitsmodul (10),
- einen Speicherbereich (22) mit einem Master Transportschlüssel (105),
- ein Schlüsselableitungsmodul (23) zum Ableiten eines schlüsselpaarspezifischen Transportschlüssels (TK) aus dem Master Transportschlüssel (MK) unter Verwendung eines schlüsselpaarspezifischen Ableitungsparameters (DP),
wobei der schlüsselpaarspezifische Ableitungsparameter aus einer Zertifikatinformation des digitalen Zertifikates, insbesondere dem öffentlichen Schlüssel des digitalen Zertifikates, einem Geräteidentifizierer, oder einem Hash-Wert des digitalen Zertifikates, gebildet wird,
wobei der Geräteidentifizierer dem programmierbaren Hardware-Sicherheitsmodul oder dem korrespondierenden programmierbaren Hardware-Sicherheitsmodul zusammen mit einer Schlüsselanforderungs-nachricht übermittelt wird,
wobei der schlüsselpaarspezifische Ableitungsparameter für das Schlüsselpaar bzw. den privaten Schlüssel oder den öffentlichen Schlüssel des Schlüsselpaares kennzeichnend ist und wobei der schlüsselpaarspezifische Transportschlüssel (TK) zum Entschlüsseln der verschlüsselten Datei verwendbar ist.

4. Korrespondierendes programmierbares Hardware Sicherheitsmodul (20) nach Anspruch 3, ferner aufweisend eine Schnittstelle (24) zum Übertragen des schlüsselpaarspezifischen Transportschlüssels (TK) an ein Zielgerät (30).

5. Korrespondierendes programmierbares Hardware Sicherheitsmodul (20) nach Anspruch 3, ferner aufweisend eine Schnittstelle (25) zum Übertragen des privaten Schlüssels an ein Zielgerät.

6. Verfahren zum Sichern eines privaten Schlüssels eines kryptographischen Schlüsselpaares, mit folgenden Schritten:
- Erzeugen (101) des kryptographischen Schlüsselpaares auf einem programmierbaren Hardware Sicherheitsmodul,
- Erzeugen eines digitalen Zertifikates umfassend den öffentlichen Schlüssel des kryptographischen Schlüsselpaares, wobei das kryptographische Schlüsselpaar für ein korrespondierendes programmierbares Hardware-Sicherheitsmodul erzeugt wird,
- Ableiten (102) eines schlüsselpaarspezifischen Transportschlüssels aus einem Master Transportschlüssel unter Verwendung eines schlüsselpaarspezifischen Ableitungsparameters, wobei der schlüsselpaarspezifische Ableitungsparameter aus einer Zertifikatinformation des digitalen Zertifikates, insbesondere dem öffentlichen Schlüssel des digitalen Zertifikates, einem Geräteidentifizierer, oder einem Hash-Wert des digitalen Zertifikates, gebildet wird und
wobei der Geräteidentifizierer dem programmierbaren Hardware-Sicherheitsmodul oder dem korrespondierenden programmierbaren Hardware-Sicherheitsmodul zusammen mit einer Schlüsselanforderungs-nachricht übermittelt wird,
- Verschlüsseln (103) des privaten Schlüssels mit dem schlüsselpaarspezifischen Transportschlüssel.

7. Verfahren nach Anspruch 6, ferner umfassend:
- Erzeugen (101') eines digitalen Zertifikates umfassend einen öffentlichen Schlüssel des kryptographischen Schlüsselpaares.

8. Verfahren zum gesicherten Bereitstellen eines privaten Schlüssels eines kryptographischen Schlüsselpaares auf einem korrespondierenden programmierbaren Hardware Sicherheitsmodul (20), mit folgenden Schritten:
- Empfangen (201) des privaten Schlüssels als verschlüsselte Datei sowie eines digitalen Zertifikates umfassend einen öffentlichen Schlüssel des kryptographischen Schlüsselpaares von einem programmierbaren Hardware Sicherheitsmodul (10),
- Ableiten (202) eines schlüsselpaarspezifischen Transportschlüssels aus einem Master Transportschlüssel unter Verwendung eines schlüsselpaarspezifischen Ableitungsparameters, wobei der schlüsselpaarspezifische Ableitungsparameter aus einer Zertifikatinformation des digitalen Zertifikates, insbesondere dem öffentlichen Schlüssel des digitalen Zertifikates, einem Geräteidentifizierer, oder einem Hash-Wert des digitalen Zertifikates, gebildet wird,
wobei der Geräteidentifizierer dem programmierbaren Hardware-Sicherheitsmodul oder dem korrespondierenden programmierbaren Hardware-Sicherheitsmodul zusammen mit einer Schlüsselanforderungs-nachricht übermittelt wird und
wobei der schlüsselpaarspezifische Transportschlüssel zum Entschlüsseln der verschlüsselten Datei verwendbar ist.

9. Verfahren nach Anspruch 8, ferner umfassend:
- Bereitstellen (203) des digitalen Zertifikates an ein Zielgerät,
- Entschlüsseln (204) der verschlüsselten Datei mittels des schlüsselpaarspezifischen Transportschlüssels,
- Bereitstellen (205) des entschlüsselten privaten Schlüssels an das Zielgerät.

10. Verfahren nach Anspruch 8, ferner umfassend:
- Bereitstellen (203) des digitalen Zertifikates an ein Zielgerät,
- Bereitstellen (204') der verschlüsselten Datei an das Zielgerät,
- Bereitstellen (205') des schlüsselpaarspezifischen Transportschlüssels an das Zielgerät.

11. Verfahren nach einem der Ansprüche 8 bis 10, wobei das korrespondierende programmierbare Hardware Sicherheitsmodul das Zielgerät authentisiert.

12. Verfahren nach einem der Ansprüche 8 bis 11, wobei das korrespondierende programmierbare Hardware Sicherheitsmodul einen zielgerätespezifischen Schlüssel erzeugt (206) und dem Zielgerät den privaten Schlüssel oder den schlüsselpaarspezifischen Transportschlüssels mit dem zielgerätespezifischen Schlüssel geschützt bereitstellt.

13. Verfahren nach einem der Ansprüche 6 bis 12, wobei zum Ableiten des schlüsselpaarspezifischen Transportschlüssels eine Schlüsselableitungsfunktion verwendet wird, welcher als Eingabeparameter zumindest der schlüsselpaarspezifische Ableitungsparameter und der Master Transportschlüssel vorgegeben werden.

## Claims

1. Programmable hardware security module (10), comprising:
- an application device (11) for generating a cryptographic key pair,
wherein the cryptographic key pair comprises a private key and a public key,
- a memory area (12) containing a master transport key (MK),
- a device (15) for generating a digital certificate comprising the public key of the cryptographic key pair,
wherein the cryptographic key pair is generated for a corresponding programmable hardware security module,
- a key derivation module (13) for deriving a key-pair-specific transport key (TK) from the master transport key (MK) by using a key-pair-specific derivation parameter (DP),
wherein the key-pair-specific derivation parameter is characteristic of the key pair or of the private key or the public key of the key pair,
wherein the key-pair-specific derivation parameter is formed from certificate information of the digital certificate, in particular the public key of the digital certificate or a hash value of the digital certificate or a device identifier,
wherein the device identifier is transmitted to the programmable hardware security module or the corresponding programmable hardware security module together with a key request message, and
wherein the key-pair-specific transport key (TK) is able to be used for encrypting the private key of the cryptographic key pair.

2. Programmable hardware security module (10) according to Claim 1, further comprising an output unit (14) for outputting the private key as an encrypted file (KF).

3. Corresponding programmable hardware security module 20, comprising
- a receiving device (21) for receiving a private key of a cryptographic key pair as an encrypted file and a digital certificate comprising a public key of the cryptographic key pair from a programmable hardware security module (10),
- a memory area (22) containing a master transport key (MK),
- a key derivation module (23) for deriving a key-pair-specific transport key (TK) from the master transport key (MK) by using a key-pair-specific derivation parameter (DP),
wherein the key-pair-specific derivation parameter is formed from certificate information of the digital certificate, in particular the public key of the digital certificate, a device identifier or a hash value of the digital certificate,
wherein the device identifier is transmitted to the programmable hardware security module or the corresponding programmable hardware security module together with a key request message,
wherein the key-pair-specific derivation parameter is characteristic of the key pair or of the private key or the public key of the key pair
and wherein the key-pair-specific transport key (TK) is able to be used for decrypting the encrypted file.

4. Corresponding programmable hardware security module (20) according to Claim 3, further comprising an interface (24) for transferring the key-pair-specific transport key (TK) to a target device (30).

5. Corresponding programmable hardware security module (20) according to Claim 3, further comprising an interface (25) for transferring the private key to a target device.

6. Method for securing a private key of a cryptographic key pair, having the following steps:
- generating (101) the cryptographic key pair on a programmable hardware security module,
- generating a digital certificate comprising the public key of the cryptographic key pair,
wherein the cryptographic key pair is generated for a corresponding programmable hardware security module,
- deriving (102) a key-pair-specific transport key from a master transport key by using a key-pair-specific derivation parameter, wherein the key-pair-specific derivation parameter is formed from certificate information of the digital certificate, in particular the public key of the digital certificate, a device identifier or a hash value of the digital certificate, and
wherein the device identifier is transmitted to the programmable hardware security module or the corresponding programmable hardware security module together with a key request message,
- encrypting (103) the private key using the key-pair-specific transport key.

7. Method according to Claim 6, further comprising:
- generating (101') a digital certificate comprising a public key of the cryptographic key pair.

8. Method for securely providing a private key of a cryptographic key pair on a corresponding programmable hardware security module (20), having the following steps:
- receiving (201) the private key as an encrypted file and a digital certificate comprising a public key of the cryptographic key pair from a programmable hardware security module (10),
- deriving (202) a key-pair-specific transport key from a master transport key by using a key-pair-specific derivation parameter,
wherein the key-pair-specific derivation parameter is formed from certificate information of the digital certificate, in particular the public key of the digital certificate, a device identifier or a hash value of the digital certificate,
wherein the device identifier is transmitted to the programmable hardware security module or the corresponding programmable hardware security module together with a key request message, and
wherein the key-pair-specific transport key is able to be used for decrypting the encrypted file.

9. Method according to Claim 8, further comprising:
- providing (203) the digital certificate to a target device,
- decrypting (204) the encrypted file by means of the key-pair-specific transport key,
- providing (205) the decrypted private key to the target device.

10. Method according to Claim 8, further comprising:
- providing (203) the digital certificate to a target device,
- providing (204') the encrypted file to the target device,
- providing (205') the key-pair specific transport key to the target device.

11. Method according to one of Claims 8 to 10, wherein the corresponding programmable hardware security module authenticates the target device.

12. Method according to one of Claims 8 to 11, wherein the corresponding programmable hardware security module generates a target-device-specific key (206) and provides the target device with the private key or the key-pair-specific transport key in a manner protected by the target-device-specific key.

13. Method according to one of Claims 6 to 12, wherein the key-pair-specific transport key is derived by using a key derivation function for which at least the key-pair-specific derivation parameter and the master transport key are predetermined as input parameters.

## Revendications

1. Module matériel de sécurité programmable (10) comprenant :
- un dispositif d'application (11) pour générer une paire de clés cryptographiques,
dans lequel la paire de clés cryptographiques comprend une clé privée et une clé publique,
- un espace de stockage (12) avec une clé de transport maître (MK),
- un dispositif (15) pour générer un certificat numérique comprenant la clé publique de la paire de clés cryptographiques, dans lequel la paire de clés cryptographiques est générée pour un module matériel de sécurité programmable correspondant,
- un module de déduction de clé (13) pour en déduire une clé de transport (TK) spécifique à la paire de clés à partir de la clé de transport maître (MK) au moyen d'un paramètre de déduction (DP) spécifique à la paire de clés,
dans lequel le paramètre de déduction spécifique à la paire de clés est caractéristique de la paire de clés ou de la clé privée ou de la clé publique de la paire de clés,
dans lequel le paramètre de déduction spécifique à la paire de clés est formé à partir d'une information de certificat numérique, en particulier la clé publique du certificat numérique ou une valeur de hachage du certificat numérique ou un identificateur de dispositif,
dans lequel l'identificateur de dispositif est transmis au module matériel de sécurité programmable ou au module matériel de sécurité programmable correspondant en même temps qu'un message de demande de clé,
et
dans lequel la clé de transport spécifique à la paire de clés (TK) peut être utilisée pour chiffrer la clé privée de la paire de clés cryptographiques.

2. Module matériel de sécurité programmable (10) selon la revendication 1, comprenant en outre une unité de sortie (14) pour émettre la clé privée sous la forme d'un fichier chiffré (KF).

3. Module matériel de sécurité programmable correspondant (20), comprenant :
- un dispositif de réception (21) pour recevoir une clé privée d'une paire de clés cryptographiques sous la forme d'un fichier chiffré et un certificat numérique comprenant une clé publique de la paire de clés cryptographiques d'un module matériel de sécurité programmable (10),
- un espace de stockage (22) avec une clé de transport maître (MK),
- un module de déduction de clé (23) pour en déduire une clé de transport spécifique à la paire de clés (TK) à partir de la clé de transport maître (MK) au moyen d'un paramètre de déduction spécifique à la paire de clés (DP),
dans lequel le paramètre de déduction spécifique à la paire de clés est formé à partir d'une information de certificat du certificat numérique, en particulier la clé publique du certificat numérique, un identificateur de dispositif ou une valeur de hachage du certificat numérique,
dans lequel l'identificateur de dispositif est transmis au module matériel de sécurité programmable ou au module matériel de sécurité programmable correspondant en même temps qu'un message de demande de clé,
dans lequel le paramètre de déduction spécifique à la paire de clés est caractéristique de la paire de clés ou de la clé privée ou de la clé publique de la paire de clés, respectivement, et dans lequel la clé de transport spécifique à la paire de clés (TK) peut être utilisée pour déchiffrer le fichier chiffré.

4. Module matériel de sécurité programmable correspondant (20) selon la revendication 3, comprenant en outre une interface (24) pour transmettre la clé de transport (TK) spécifique à la paire de clés à un dispositif cible (30).

5. Module matériel de sécurité programmable correspondant (20) selon la revendication 3, comprenant en outre une interface (25) pour transmettre la clé privée à un dispositif cible.

6. Procédé de sécurisation d'une clé privée d'une paire de clés cryptographiques, comprenant les étapes suivantes :
- générer (101) la paire de clés cryptographiques sur un module matériel de sécurité programmable,
- générer un certificat numérique comprenant la clé publique de la paire de clés cryptographiques,
dans lequel la paire de clés cryptographiques est générée pour un module matériel de sécurité programmable correspondant,
- déduire (102) une clé de transport spécifique à une paire de clés à partir d'une clé de transport maître au moyen d'un paramètre de déduction spécifique à une paire de clés,
dans lequel le paramètre de déduction spécifique à une paire de clés est formé à partir d'une information de certificat du certificat numérique, en particulier la clé publique du certificat numérique, un identificateur de dispositif, ou une valeur de hachage du certificat numérique, et
dans lequel l'identificateur de dispositif est transmis au module matériel de sécurité programmable ou au module matériel de sécurité programmable correspondant en même temps qu'un message de demande de clé,
- chiffrer (103) la clé privée avec la clé de transport spécifique à la paire de clés.

7. Procédé selon la revendication 6, comprenant en outre l'étape suivante :
- générer (101') un certificat numérique comprenant une clé publique de la paire de clés cryptographiques.

8. Procédé pour fournir de manière sécurisée une clé privée d'une paire de clés cryptographiques sur un module matériel de sécurité programmable correspondant (20), comprenant les étapes suivantes :
- recevoir (201) la clé privée sous forme de fichier chiffré et un certificat numérique comprenant une clé publique de la paire de clés cryptographiques d'un module matériel de sécurité programmable (10),
- déduire (202) une clé de transport spécifique à une paire de clés à partir d'une clé de transport maître au moyen d'un paramètre de déduction spécifique à une paire de clés,
dans lequel le paramètre de déduction spécifique à la paire de clés est formé à partir d'une information de certificat du certificat numérique, en particulier la clé publique du certificat numérique, un identificateur de dispositif, ou une valeur de hachage du certificat numérique,
dans lequel l'identificateur de dispositif est transmis au module matériel de sécurité programmable ou au module matériel de sécurité programmable correspondant en même temps qu'un message de demande de clé, et
dans lequel la clé de transport spécifique à la paire de clés peut être utilisée pour déchiffrer le fichier chiffré.

9. Procédé selon la revendication 8, comprenant en outre les étapes suivantes :
- fournir (203) le certificat numérique à un dispositif cible,
- déchiffrer (204) le fichier chiffré au moyen de la clé de transport spécifique à la paire de clés,
- fournir (205) la clé privée déchiffrée au dispositif cible.

10. Procédé selon la revendication 8, comprenant en outre les étapes suivantes :
- fournir (203) le certificat numérique à un dispositif cible,
- fournir (204') le fichier chiffré au dispositif cible,
- fournir (205') la clé de transport spécifique à la paire de clés au dispositif cible.

11. Procédé selon l'une des revendications 8 à 10, dans lequel le module matériel de sécurité programmable correspondant authentifie le dispositif cible.

12. Procédé selon l'une des revendications 8 à 11, dans lequel le module matériel de sécurité programmable correspondant génère (206) une clé spécifique au dispositif cible et fournit au dispositif cible la clé privée ou la clé de transport spécifique à la paire de clés protégée par la clé spécifique au dispositif cible.

13. Procédé selon l'une des revendications 6 à 12, dans lequel, pour déduire la clé de transport spécifique à la paire de clés, une fonction de déduction de clé est utilisée, pour laquelle au moins le paramètre de déduction spécifique à la paire de clés et la clé de transport maître sont prédéfinis comme paramètres de saisie.
